Europäisches Patentamt

(19) European Patent Office

Office européen des brevets

(11) Numéro de publication : **0 335 782 B1**

## (12) FASCICULE DE BREVET EUROPEEN

(45) Date de publication du fascicule du brevet :
08.01.92 Bulletin 92/02

(51) Int. Cl.⁵ : **F16D 43/286, F16D 25/063, F16D 25/14, F16D 27/00, F16D 27/16**

(21) Numéro de dépôt : 89400832.5

(22) Date de dépôt : 24.03.89

(54) Embrayage, notamment pour véhicule automobile.

(30) Priorité : 30.03.88 FR 8804172

(43) Date de publication de la demande :
04.10.89 Bulletin 89/40

(45) Mention de la délivrance du brevet :
08.01.92 Bulletin 92/02

(84) Etats contractants désignés :
DE FR IT

(56) Documents cités :
EP-A- 0 182 312
DE-B- 1 600 183
DE-C- 3 714 912
FR-A- 2 323 918
FR-A- 2 523 743
FR-A- 2 541 793
FR-A- 2 541 793
FR-A- 2 616 501
GB-A- 1 180 357
GB-A- 2 082 697
GB-A- 2 124 321
US-A- 2 642 971
US-A- 2 963 134

(56) Documents cités :
US-A- 3 108 471
US-A- 3 251 247
US-A- 4 081 063
US-A- 4 569 234
PATENT ABSTRACTS OF JAPAN, vol. 7, no. 253 (P-235)[1398], 10 novembre 1983; & JP-A-58 137 724 (MITSUBISHI DENKI K.K.) 16-08-1983
PATENT ABSTRACTS OF JAPAN, vol. 7, no. 121 (P-199)[1266], 25 mai 1983; & JP-A-58 38 826 (MITSUBISHI DENKI K.K.) 07-03-1983

(73) Titulaire : VALEO
64 Avenue de la Grande Armée
F-75017 Paris (FR)

(72) Inventeur : Beccaris, Carlo
Via Trinita 19
I-Santena (Torino) (IT)
Inventeur : Rubatto, Massimo
Via Tiziano 24
I-10131 Torino (IT)

(74) Mandataire : Gamonal, Didier
Société VALEO Service Propriété Industrielle
30, rue Blanqui
F-93406 Saint Ouen (FR)

## Description

La présente invention concerne les embrayages, notamment pour véhicule automobile.

Un tel embrayage comporte globalement deux parties coaxiales, l'une équipée annulairement d'un ou plusieurs disques de friction échelonnés axialement, l'autre qui comprend un plateau de pression, formant un organe de serrage, et un flasque de réaction pour serrage axial du ou des disques de friction entre lesdits plateau et flasque. Le plateau de pression est soumis à l'action de moyens de commande propres à le solliciter en direction du flasque de réaction.

L'une des parties est solidaire en rotation d'un arbre menant, tandis que l'autre est solidaire en rotation d'un arbre mené, le serrage axial du ou des disques de friction (embrayage engagé) permettant la solidarisation en rotation de l'une à l'autre desdites parties.

Les moyens de commande peuvent être du type hydraulique comme décrit dans le document DE-B-1600183 avec deux pièces en relation de cylindre piston formant entre elles une chambre de pression à volume variable, la pièce mobile de l'ensemble cylindre piston formant le plateau de pression de l'embrayage.

En variante, les moyens de commande peuvent comporter des moyens élastiques à action axiale, tel un diaphragme, comme décrit dans le document FR-A-2616501, en combinaison avec des moyens de pilotage sensibles au couple transitant par l'embrayage concerné et de moyens d'actionnement propres à agir sur une butée de débrayage en réponse aux moyens de pilotage, ladite butée manoeuvrant lesdits moyens élastiques pour modifications de la pression de serrage du plateau de pression. Grâce aux moyens d'actionnement commandés par les moyens de pilotage il est possible d'absorber les surcouples.

Dans un tel embrayage, le couple transmis dépend de la pression de commande exercée par le plateau de pression ainsi que du frottement, notamment du coefficient de frottement du ou des disques de friction et du rendement interne de l'embrayage influencé par le coulissement du ou des disques de friction.

En outre, le coefficient de frottement subit des variations en fonction, notamment, de la vitesse et est influencé par le fluide de lubrification lorsque le ou les disques sont lubrifiés par un fluide comme décrit dans le document sus-mentionné DE-B-1600183.

Dans celui-ci, il est prévu un mécanisme de coupure et de mesure de couple à écartement variable en fonction du couple, du genre comportant deux parties séparées par une fente et reliées l'une à l'autre par des moyens d'écartement.

Ce mécanisme, lié en rotation à l'arbre menant, agit sur l'ensemble cylindre-piston par une pièce intermédiaire pour modifier la pression dans la chambre de commande.

Pour éviter cette pièce intermédiaire, on peut penser à faire agir le mécanisme de coupure directement sur le piston de l'embrayage, comme décrit dans le document US-A-3511349 avec intervention de paliers antifriction associés aux parties du mécanisme de coupure.

Dans ces documents, on recherche à limiter le couple autour d'une valeur déterminée, sans rechercher une modulation de la pression de commande en fonction des besoins de l'arbre mené. De plus, dans tous les cas, le mécanisme de coupure est intégré à l'embrayage en étant logé dans le volume délimité par le flasque de réaction et le plateau de pression, de sorte qu'il faut modifier la structure générale de l'embrayage.

Dans un autre domaine que l'embrayage on connaît par le document Patent Abstracts of Japan, volume 7, numéro 253 (P235) (1398), un détecteur de couple logé et maintenu dans un boîtier coopérant avec un capteur d'effort longitudinal associé à l'une des parties dudit mécanisme. Ce dispositif est approprié pour faire des mesures, mais pas pour un embrayage objet de forces parasites longitudinales.

La présente invention a pour objet de résoudre ces inconvénients et donc de créer une disposition économique permettant de moduler la pression de commande en fonction des besoins de l'arbre mené, tout en conservant la structure d'un embrayage classique et en minimisant les forces parasites longitudinales.

Suivant l'invention, un embrayage du type décrit dans le brevet US-A-3511349 est caractérisé en ce que le mécanisme de coupure est lié en rotation à l'une des parties de l'embrayage en étant logé et maintenu dans un boîtier, comportant au moins deux parties, disposé à l'extérieur du volume délimité par le plateau de pression et le flasque de réaction avec interposition directe ou indirecte entre le boîtier et chaque partie du mécanisme de coupure d'un palier anti-friction ledit boîtier étant relié à un support fixe et coopérant avec un capteur d'effort longitudinal associé au mécanisme de coupure, ledit capteur étant relié à une unité de pilotage pilotant la pression de commande exercée par lesdits moyens de commande sur le plateau de pression, et en ce que des moyens de limitation des forces parasites longitudinales, portés par l'un des éléments mécanisme de coupure-boîtier, sont prévus pour minimiser lesdites forces parasites provenant notamment desdits premier et second arbres.

Grâce à l'invention, la volonté d'écartement du mécanisme de coupure varie en fonction des besoins de l'arbre mené ce qui permet, grâce au capteur, de piloter la pression de commande et donc le couple transmis nécessaire à l'utilisation de l'arbre mené.

On appréciera que l'embrayage est conservé globalement et que la solution est économique du fait, notamment, de l'utilisation d'un capteur longitudinal de mise en oeuvre plus simple que des capteurs tournants. En outre, les temps de réponse sont courts.

Le boîtier relié au support fixe constitue un moyen de maintien agissant sur le mécanisme de coupure pour entraver la variation d'épaisseur de celui-ci. Grâce à cela, une variation de couple se traduira par une contrainte sur le capteur et par un bonne précision de la mesure favorisée par lesdits moyens de limitation.

Dans une forme de réalisation pour formation desdits moyens de limitation et pour minimiser les éventuelles forces longitudinales provenant notamment des arbres menant et mené, le mécanisme de coupure peut être logé dans un boîtier suspendu élastiquement.

Dans une autre forme de réalisation pour minimiser encore les forces parasites, on peut utiliser deux capteurs d'effort longitudinal disposés de part et d'autre du mécanisme de coupure.

La description en annexe illustre l'invention en référence aux dessins annexés dans lesquels :
— la figure 1 est une vue partielle en coupe axiale de l'embrayage selon l'invention ;
— la figure 2 est une vue simplifiée reprenant les éléments de la figure 1 ;
— les figures 3 à 7 sont des vues analogues à la figure 2 pour d'autres variantes de réalisation ;
— la figure 8 est une vue en coupe axiale montrant le montage du mécanisme de coupure dans son boîtier pour encore une autre variante de réalisation ;
— la figure 9 montre la fixation au support fixe du boîtier selon la figure 8 ;
— la figure 10 est une vue dans le sens circonférentiel montrant les empreintes et les billes du mécanisme de coupure ;
— la figure 11 est une vue analogue a la figure 10, pour encore une autre variante de réalisation ;
— la figure 12 est une vue en coupe axiale pour une application à un embrayage à diaphragme, identique à la figure 2 du document FR-A-2616501,
— la figure 13 est une vue analogue à la figure 1 pour une autre réalisation.

Dans les formes de réalisation représentées, on voit en 10 l'embrayage pour véhicules automobiles avec en 12 son support fixe ou carter.

L'embrayage 10 comporte deux parties coaxiales, A, B, l'une menante, l'autre menée ou vice versa.

La partie A présente un moyeu 14 doté d'un alésage cannelé par lequel il est calé en rotation sur un premier arbre, ici un arbre menant ou d'entrée 16, tel que l'arbre de sortie du moteur, et au moins un disque de friction 17 monté coulissant sur le moyeu 14 en étant lié en rotation à celui-ci par un montage à cannelures.

Ici, il est prévu plusieurs disques de friction 17 mobiles axialement et échelonnés axialement le long du moyeu 14 et, par clarté, tous n'ont pas été représentés.

La partie menée B comporte deux pièces 19, 20 qui, en relation de cylindre piston l'une par rapport à l'autre, forment entre elles, d'un premier côté axial des disques 17, une chambre à volume variable 21 susceptible, par un conduit 22, d'être raccordée à une source de fluide sous pression S, telle qu'une pompe. Le piston 20 est mobile axialement.

Le cylindre 19, fixe axialement, comporte un moyeu 23 par lequel il est monté rotatif dans un alésage interne 24 du carter 12 et, autour des disques 17, une jupe 26 cylindrique raccordée par une paroi transversale 25 ou fond au moyeu 23.

Cette jupe présente longitudinalement des saignées 27 à la faveur desquelles sont calés en rotation sur elle des plateaux 28, qui alternent axialement avec les disques 17.

L'extrémité ouverte de la jupe 26 est fermée par un flasque de réaction 30, calé en rotation sur la jupe 26 grâce aux saignées 27. Le flasque 30, à section transversale en forme de L, par son alésage interne cannelé, est lié en rotation à un second arbre, ici un arbre mené ou de sortie 32, tel qu'une prise de force de manière décrite ci-après.

Ce flasque 30 est calé axialement sur la jupe 26 par une rondelle ouverte 33 en prise tant avec une gorge de la jupe 26 qu'avec une gorge du flasque 30. Une frette 42 est montée sur la jupe 26 pour éviter une ouverture de celle-ci et parfaire le montage.

Le piston 20 est engagé à coulissement étanche entre, d'une part, la jupe 26 et, d'autre part, un prolongement axial 36 du moyeu 23. Des joints 110 sont prévus pour l'étanchéité ainsi qu'un roulement 111 pour support de l'arbre 16. Ce piston 20 constitue un organe de serrage et un plateau de pression pour serrage du ou des disques 17 entre celui-ci et le flasque 30.

Le piston 20, le cylindre 19 et la chambre de pression 21 constituent les moyens de commande sollicitant le plateau de pression 20 en direction du flasque 30.

Suivant l'invention, un embrayage du type susindiqué est caractérisé en ce que le mécanisme de coupure 50 est lié en rotation à l'une des parties A, B de l'embrayage en étant logé et maintenu dans un boîtier 100, comportant au moins deux parties, disposé à l'extérieur du volume délimité par le plateau de pression 20 et le flasque de réaction 30 avec interposition directe ou indirecte entre le boîtier 100 et chaque partie 51, 52 du mécanisme de coupure d'un palier antifriction 53, 53′ ledit boîtier 100 étant relié à un support fixe 12 et coopérant avec un capteur d'effort longitudinal 60 associé au mécanisme de coupure 50, ledit capteur 60 étant relié à une unité de pilotage 70 pilotant la pression de commande exercée par lesdits moyens de commande 19, 20, 21 sur le plateau de pression 20, et en ce que des moyens de limitation des forces parasites longitudinales 103, 104, 107, 60, 60′, 200, 143, portés par l'un des éléments mécanisme de coupure 50 — boîtier 100, sont prévus pour minimiser lesdites forces parasites provenant notamment desdits premier 16 et second 32 arbres.

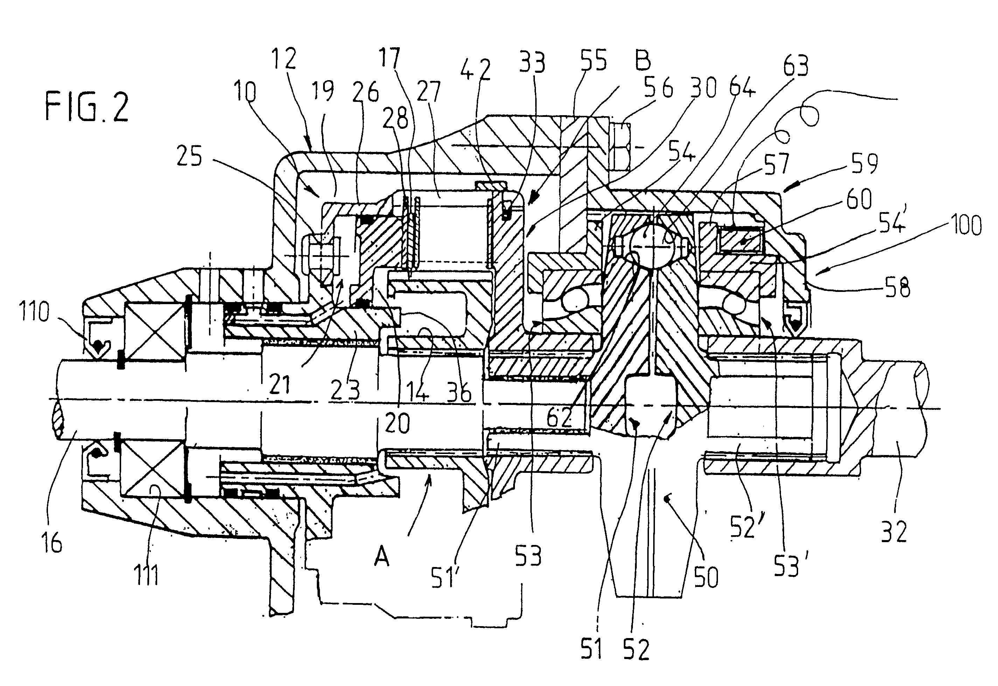

Comme mieux visible à la figure 2, le mécanisme de coupure 50 comporte deux parties 51, 52 séparées par une fente. La partie 51 est liée en rotation au flasque 30 par une liaison à cannelures, et comporte un prolongement axial 51′ pénétrant dans un prolongement annulaire creux, d'orientation axiale, du flasque 30 et doté de cannelures de formes complémentaires à celles du flasque 30. Un palier anti-friction, ici roulement à billes à contact oblique 53, est monté sur le prolongement axial du flasque 30 et est interposé radialement entre ledit prolongement et une pièce de retenue 54, d'une part, épaulée pour maintien axial du roulement 53 et, d'autre part, épaulée pour contact avec un flasque 55 fixé en bout du carter 12 par des vis 56. Les épaulements sont disposés aux extrémités d'une couronne axiale et s'étendent radialement en sens inverse. La bague interne du roulement 53 est calée axialement sur la partie 51 et la pièce 54 est engagée dans l'ouverture centrale du flasque 55 et traverse celle-ci à coulissement. Le mécanisme de coupure 50 est donc lié en rotation au cylindre 19 en étant disposé à l'extérieur de l'embrayage.

La partie 52 a une forme analogue à la partie 51 et présente un prolongement axial 52′, engagé dans une extrémité borgne de l'arbre de sortie 32 et lié en rotation à celui-ci par une liaison à cannelures.

Un roulement à billes à contact oblique 53′ est monté sur le prolongement 52′ et est interposé entre ledit prolongement 52′ et une pièce de retenue 54′, formant une pièce porteuse pour le capteur 60 et montée en regard de la pièce 54. Cette pièce 54′, identique a la pièce 54, est, d'une part, épaulée pour le maintien du roulement 53′ et, d'autre part, épaulée en 57 pour le maintien du capteur 60 emprisonné entre ledit épaulement 57 et le fond 58 d'un couvercle 59 en forme d'assiette creuse ouvert centralement pour le passage de l'arbre 32. On notera que la pièce 54′ peut se déplacer axialement par rapport au fond 58 et qu'elle est centrée et portée par celui-ci. De même on notera que le roulement 53′ est calé axialement sur la portée 52 par sa bague interne. Par son rebord radial, le couvercle 59 est fixé en même temps que le flasque 55 par les vis 56 au carter fixe 12 en étant accolé a celui-ci. Les vis 56 permettent donc un maintien des différentes pièces 54, 53, 51, 52, 53′, 54′, 60 entre les parois transversales 55, 58.

Le couvercle 59 et le flasque 55 forment un boîtier 100 et donc, par coopération avec la pièce 54 et le capteur 60 associé à la pièce 54′, des moyens de maintien pour entraver la variation d'épaisseur du mécanisme 50. Le boîtier 100 porte le capteur 60 et maintient du mécanisme de coupure 50.

La variation d'épaisseur est réalisée par des moyens d'écartement.

Plus précisément, chaque partie 51, 52 est dotée d'empreintes tronconiques 62, 63 disposées en regard l'une de l'autre. Des billes 64 sont montées entre les empreintes 62, 63.

Les billes 64 et les empreintes 62, 63 forment des moyens d'écartement reliant l'une à l'autre les parties 51, 52.

Ainsi, toute différence de couple entre le couple transmis par l'embrayage 10 et le couple transmis par l'arbre 32 se traduit par un déplacement relatif d'une des parties 51 par rapport à l'autre 52 et donc par un entraînement des billes 64, qui tendent à écarter les parties 51, 52 et à provoquer un écartement axial du mécanisme 50.

Du fait de la présence du boîtier 100, cet écartement est entravé et se traduit par une contrainte exercée sur le capteur 60 d'effort longitudinal, qui peut être une jauge de contrainte ou un capteur de pression délivrant un signal électrique.

Le capteur 60 envoie un signal électrique à l'unité de pilotage 70, sous forme de module électronique, laquelle envoie un signal électrique à l'organe de modulation 80.

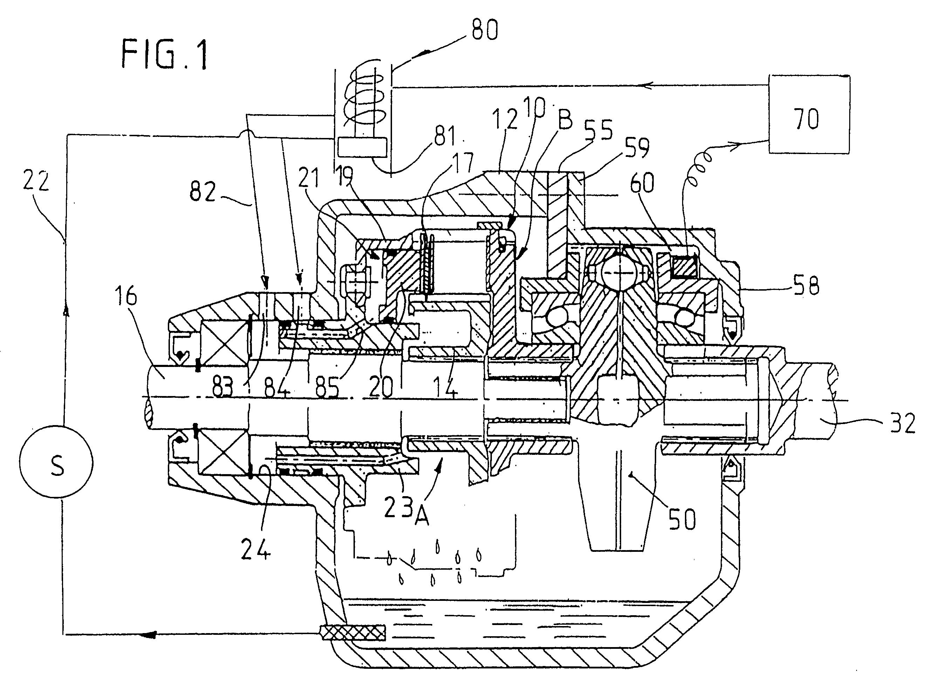

Ici cet organe est une électrovanne 80 qui comporte un tiroir mobile 81. L'électrovanne 80 est montée dans le circuit d'alimentation 22 de la chambre 21. Grâce au tiroir 81 elle obture plus ou moins un orifice en communication avec le circuit d'alimentation 22, ce qui fait varier la pression de la pompe S et de la chambre 21, et permet de mettre le circuit d'alimentation 22 en communication avec un circuit de lubrification et/ou de refroidissement 82. A la figure 1, on voit en 83 et 84 des perçages pratiqués dans le carter pour le circuit de lubrification et d'alimentation et, en 85, le circuit pratiqué dans le moyeu 23, pour communication avec la chambre 21. Ainsi l'unité de pilotage 70 pilote la pression de commande exercée par les moyens de commande 19, 20, 21 sur le piston 20.

On notera que l'unité de pilotage 70, par exemple dans le cas d'un véhicule à quatre roues motrices dit "4X4" peut recevoir une information sur la volonté de freinage pour agir sur l'organe 80 et diminuer la pression dans la chambre 21.

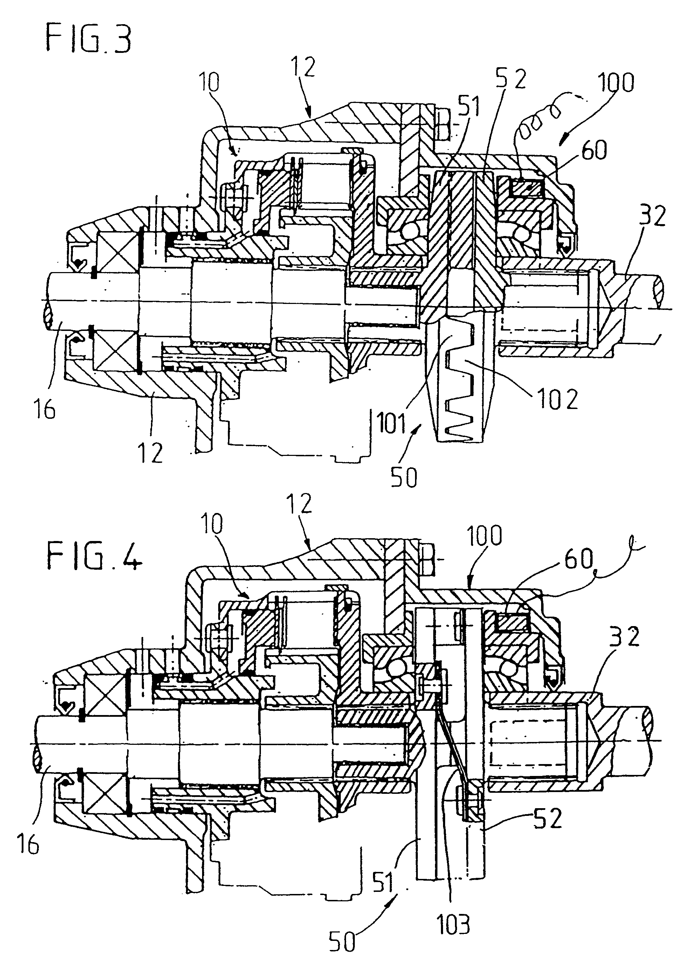

En variante, à la figure 3, les moyens d'écartement consistent en des dents 101 inclinées portées par la partie 51, et s'engageant dans des dentures complémentaires 102 de la partie 52.

Toute différence de couple entre l'arbre 32 et l'arbre 16 de l'embrayage se traduit par une volonté de déplacement relatif, entravé par le boîtier 100, de l'une des parties 51, 52 par rapport à l'autre, et par une sollicitation sur le capteur 60.

A la figure 4, les moyens d'écartement consistent en une pluralité de languettes tangentielles 103 inclinées par rapport à l'axe longitudinal commun aux arbres 16 et 32. Ici, les languettes sont cambrées en étant rivetées à l'une de leurs extrémités à la partie 51 et à leur autre extrémité à la partie 52. Les languettes 10 interviennent donc entre les deux parties 51, 52 pour formation desdits moyens de limitation selon l'invention.

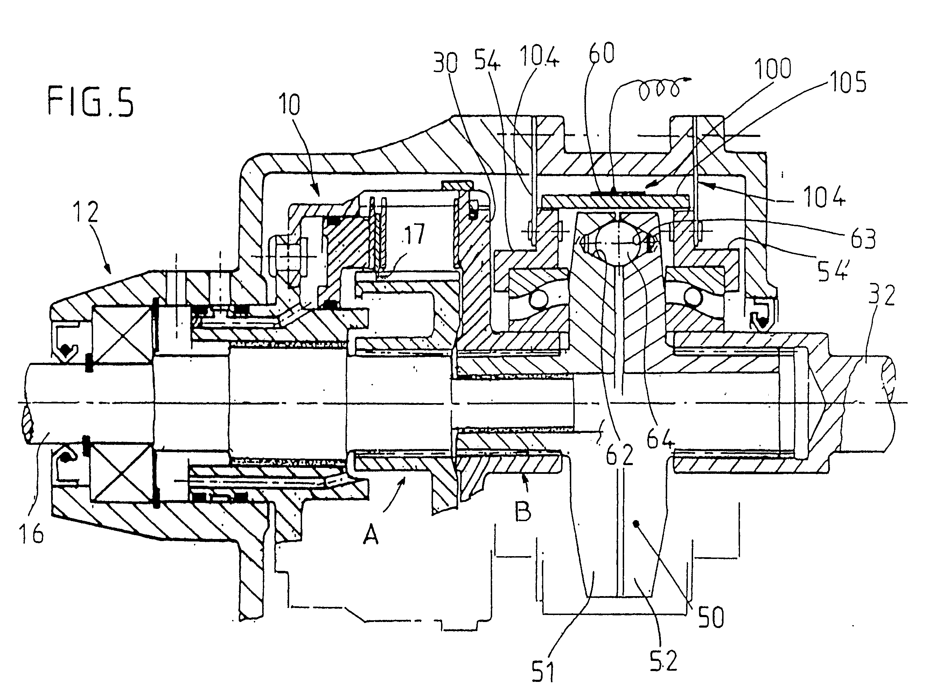

A la figure 5, le boîtier 100 est suspendu élastiquement axialement au carter 12. Ici, la suspension est réalisée par une ou plusieurs languettes tangentielles 104. En variante, il peut s'agir de disques élastiques.

Ce boîtier est délimité par les pièces de retenue 54, 54' et par la couronne 105 liée axialement aux parties radiales des pièces 54, 54'. C'est cette couronne 105 qui porte le capteur 60. On notera que la liaison axiale de la couronne 105 aux pièces 54, 54' peut se faire par vissage. A chaque pièce 54, 54' est associée une languette 104 solidarisée au carter 12.

Toute volonté d'écartement entre les parties 51 et 52 se traduit par une sollicitation en allongement de la couronne 105 et en une contrainte sur le capteur 60 coopérant avec la couronne 105.

On appréciera que les forces longitudinales parasites provenant notamment des arbres 16 et 32 sont minimisées, ladite suspension élastique du boîtier constituant des moyens de limitation des forces longitudinales portés par le boîtier 100.

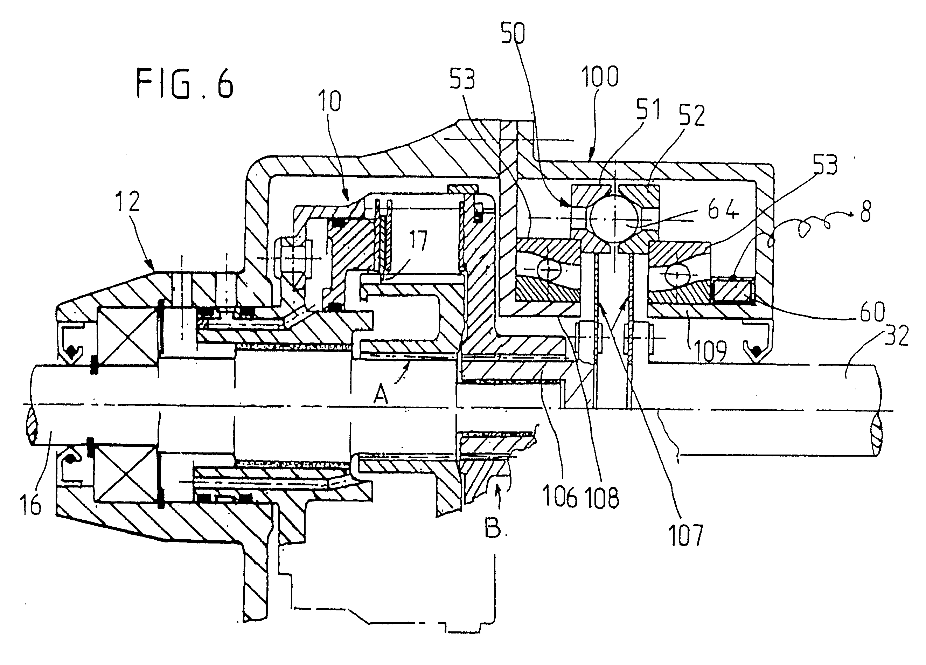

A la figure 6, les parties 51 et 52 sont reliées respectivement à l'arbre de sortie 32 et à demi-arbre 106, lié en rotation à flasque 30 par des cannelures, par des disques 107 axialement élastiques.

Les roulements 53, 53' sont centrés jar des retours axiaux 108 du flasque 55 et 109 du couvercle 59 appartenant au boîtier 100.

Le capteur est interposé entre le roulement 53' et le fond 58 en étant centré par le retour 109.

Cette disposition à disques élastiques 107 permet de réduire les efforts parasites dus aux déplacements longitudinaux de l'arbre d'entrée 16 et de sortie 32. Pour le reste, on notera que les moyens d'écartement sont indentiques à ceux des figures 1 et 2. Les moyens de limitation des forces parasites longitudinales sont donc ici portées par le mécanisme de coupure comme à la figure 4.

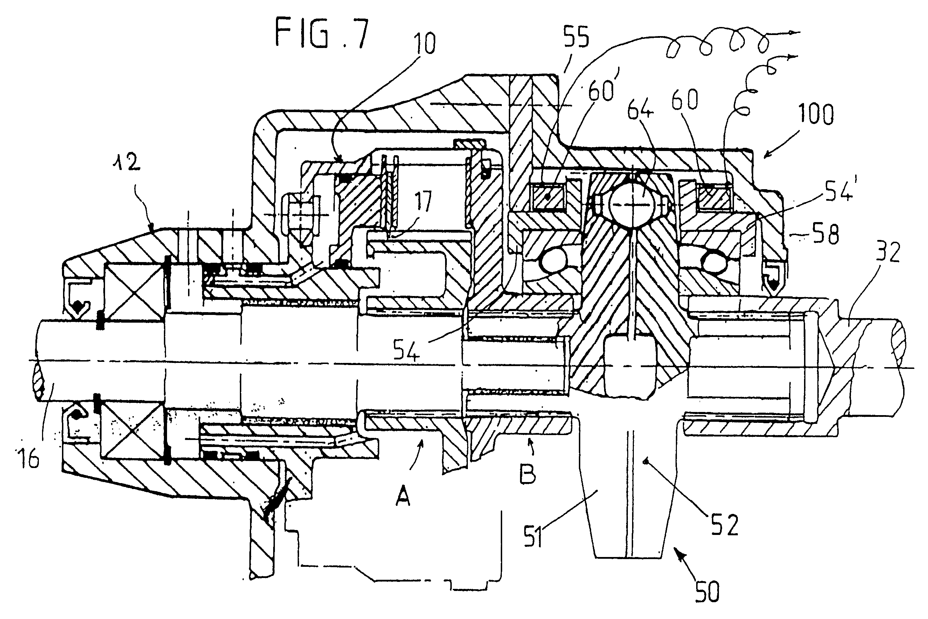

Pour minimiser encore ces efforts parasites, on interpose un autre capteur d'effort longitudinal 60' entre l'épaulement de la pièce 54 et le flasque 55 (Fig. 7). L'unité de pilotage lie la valeur moyenne des deux capteurs 60, 60', ce qui permet d'ignorer l'effet des forces longitudinales parasites. On notera que la pièce 54 est montée coulissante dans l'ouverture centrale du flasque 55. Les deux capteurs 60, 60' constituent donc des moyens de limitation des forces parasites longitudinales.

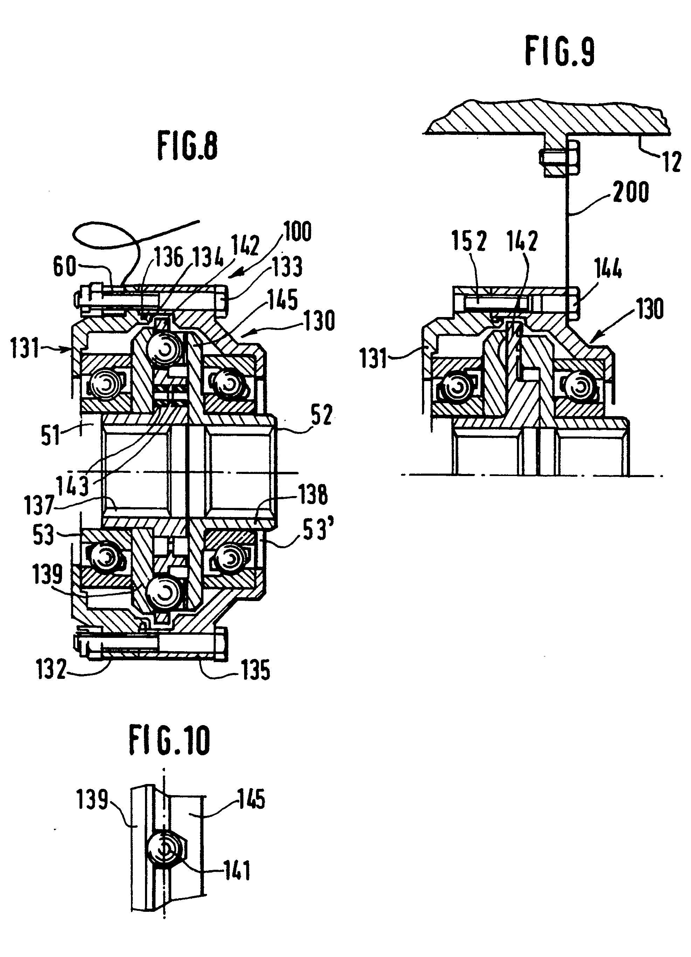

Dans les variantes des figures 8 à 10, le boîtier 100 est relié au support fixe 12 par une languette inclinée 200 appartenant aux moyens de limitation des forces parasites.

Pour formation d'un ensemble manipulable et transportable, le boîtier est en deux pièces annulaires 130, 131 reliées entre elles, ici par trois boulons 133 répartis régulièrement et traversant des rebords radiaux périphériques 132, 135 respectivement de la pièce 131 et 130. La pièce 131 est emboîtée à jeu radial dans la pièce 130. Pour ce faire, le rebord 132 est prolongé par un retour axial 134 pénétrant à jeu dans l'intérieur du rebord 135 et portant un joint torique en caoutchouc 136 pour contact avec ledit rebord 135. Localement pour l'un des boulon 133, le rebord 132 est d'épaisseur réduite pour logement d'une jauge de contrainte 60 entre ledit rebord 132 et l'écrou du boulon 133 (figure 8). Cette jauge 60 est en forme de bague en étant traversée par le boulon 133 et est donc portée extérieurement par la pièce 131.

Bien entendu, au lieu d'un joint torique 136, on peut utiliser un autre organe en caoutchouc, par exemple un anneau cylindrique ou un joint à lèvre.

De préférence, un léger jeu axial existe entre les deux rebords 132, 135 pour serrage de la jauge portée par le boîtier 100 et détermination du signal électrique initial délivré par la jauge.

Une vis spécifique 144 (figure 9) sert à la fixation de la languette 200 au boîtier 100, une autre vis étant prévue pour la fixation de l'autre extrémité au support fixe 12.

Pour la transmission du couple nécessaire à la rotation des roulements 53, 53', il est prévu un pion 152 emmanché sur 132 et coulissant sur 135 ou vice versa afin de ne pas gêner par les mouvements tangentielles des boulons 133 le signal à la jauge 60.

Les roulements 53, 53' sont interposés directement entre le bord radial des pièces 130, 131 et les parties 51, 52. La partie 51 présente un moyeu axial 137 cannelé intérieurement pour liaison en rotation avec un arbre mené ou menant portant un flasque 139 doté d'une gorge circonférentielle torique ou a fond plat pour réception de billes sphériques 141. La partie 52 présente également en regard de la précédente gorge, des empreintes pour réception des billes (figure 10). Le moyeu 137 est solidaire d'un porte-billes transversal et annulaire 142. La partie 52 présente un moyeu axial 138 d'un seul tenant avec un flasque transversal 145 portant les empreintes de réception des billes 141.

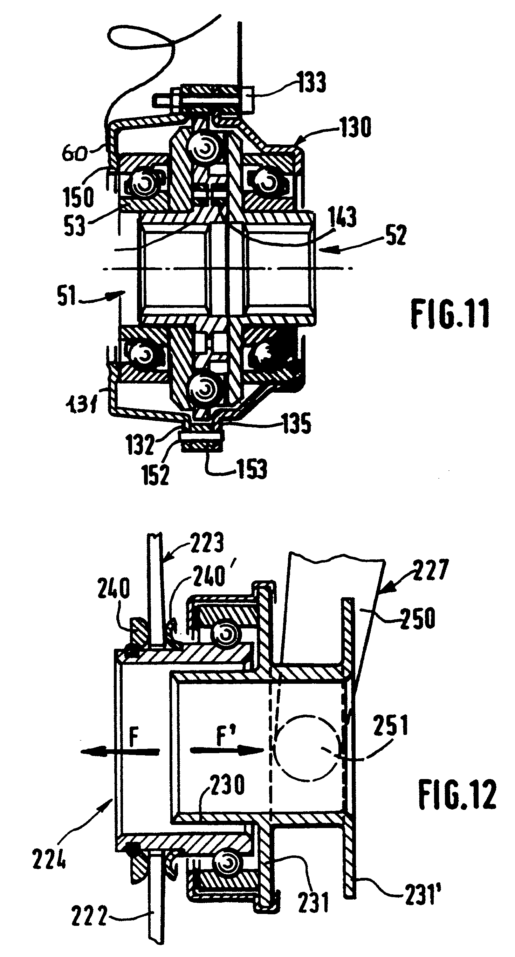

Le porte-billes 142 porte à sa base à la faveur de logement, des ressorts en caoutchouc 143 au contact respectivement des flasques 139 et 145. Ainsi, le porte-billes 142, d'un seul tenant avec le moyeu 137 (figure 9), est intercalé axialement avec jeu entre les flasques 139, 145 avec contact des ressorts 143 avec lesdits flasques. Grâce aux ressorts 143, les mouvements longitudinaux des arbres menant et mené auront peu d'influence sur la jauge 60, la languette 200 élastique favorisant aussi la précision de la mesure en autorisant des mouvements axiaux. Le joint 136 favorise également la précision, de petits mouvements radiaux étant permis. Lorsque le mécanisme 50 s'écarte, la jauge 60 est comprimé par le boîtier et délivre un signal à l'unité de pilotage. On mesure donc l'effort longitudinal. Alors qu'à la figure 8, les pièces 130, 131 étaient rigides, à la figure 11, ces pièces sont en tôle, la pièce 131 présentant un appui torique 150 pour le roulement 53, la jauge 60 étant collée extérieurement sur la pièce 131 et étant sensible aux déformations longitudinales de la pièce 131. Les ressorts 143 intervenant axialement entre les deux parties 51, 52 appartiennent donc aux moyens de limitation des forces parasites longitudinales selon l'invention.

Pour ne pas gêner la jauge 60, on prévoit un pion 152 coulissant dans les rebords 132 et 135. Ce pion est emmanché dans une entretoise 153 insérée entre les rebords 132, 135. Dans ce cas, les boulons 133 servent uniquement a la fixation, l'un deux fixant également la languette. Les autres constituants sont identiques à ceux de la figure 8.

Dans tous les cas, le boîtier et le mécanisme 50 peuvent se monter à la place de ceux des figures 1 à 7.

Ainsi qu'il ressort à l'évidence de la description et des dessins, on coupe l'un des arbres en deux demi arbres pour interposer en un endroit quelconque le mécanisme de coupure, ledit organe étant lié en rotation à l'une des parties de l'embrayage. Dans tous les cas, le boîtier 100 est délimité par deux bords radiaux centralement évidés avec l'intervention directe ou indirecte d'un roulement entre chaque bord radial et chaque partie du mécanisme de coupure.

L'arbre de sortie 32 peut être un arbre de prise de force d'un tracteur agricole ou l'essieu auxiliaire d'un véhicule à 4 roues motrices. Dans ce cas, grâce à la variation de pression une bonne stabilité de conduite est obtenue.

Bien entendu, les prolongements axiaux 51' et 52' pourraient être rapportées sur les parties 51, 52.

De même, on peut prévoir un circuit distinct pour la lubrification. Dans ce cas, l'électrovanne serait à deux voies.

On pourrait, dans ce cas, utiliser une pompe électrique pour le circuit de pression et piloter celle-ci ; la pompe constituerait l'organe de modulation.

Au lieu de roulements à billes à contact oblique, on peut utiliser d'autres roulements capables de supporter des efforts longitudinaux. En variante, on peut utiliser un palier anti-friction en matière à bas coefficient de frottement.

La partie B peut être liée en rotation à l'arbre menant et la partie A à l'arbre mené, et dans certaines applications l'embrayage multidisque peut être inversé. Dans ce cas, l'arbre d'entrée 16 est lié en rotation au cylindre 19 ou cloche, tandis que le moyeu 14, portant le disque 17, est lié en rotation à l'arbre de sortie 32.

Dans cette variante, le moyeu 14 pourrait être prolongé axialement en traversant le flasque de réaction 30 et porter le roulement 53.

Le mécanisme de coupure serait donc lié en rotation au moyeu 14 et donc au disque 17.

Bien entendu, on peut inverser les structures et, comme dans le document DE-A-1600183, le cylindre 19 peut être mobile et former le plateau de pression en étant porté par une pièce fixe à section en forme de L. Dans ce cas, la partie 23 est liée au moyeu 14 qui porte le flasque 30, tandis que la jupe 26 est coupée et porte le disque 17.

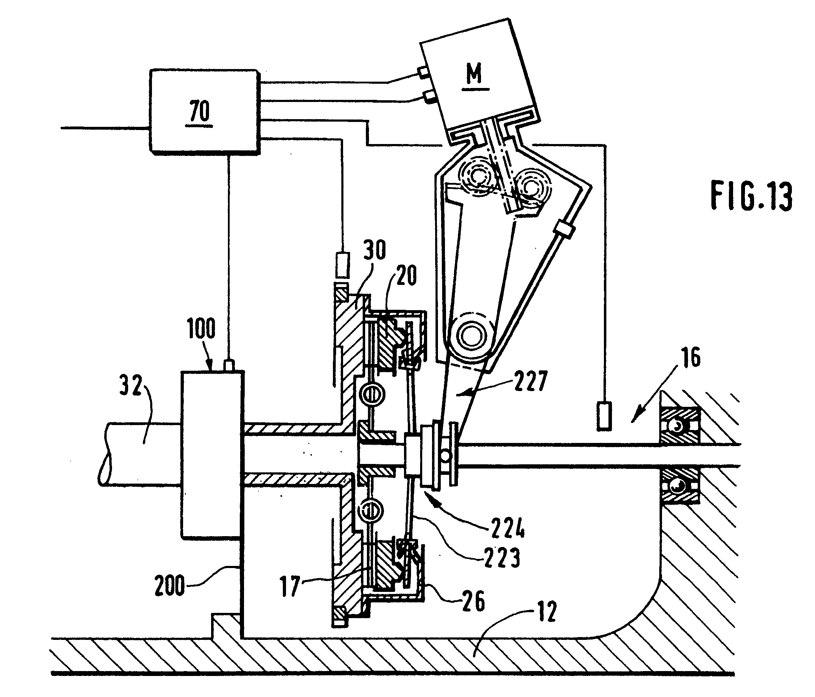

Les moyens de commande peuvent comporter un organe élastique 223 (figures 12 et 13), sous forme d'un diaphragme. Ce diaphragme agit sur un plateau de pression (20) et à sa périphérie intérieure sur une butée de débrayage 224. Comme décrit dans le document FR-A-2616501, les moyens de commande de la butée 224 à double effet comportent des moyens d'actionnement 227 propres à agir sur elle en réponse à des moyens de pilotage comprenant ici le mécanisme de coupure 50 et son boîtier 100 sensible au couple transitant par l'embrayage concerné.

Les moyens d'actionnement 227 comportent une fourchette à deux doigts symétriques dont on voit en 250 l'un des doigts, engagés sur un manchon 230 de la butée. Les doigts 250 portent chacun un tourillon 251 pour action sur les flasques 231, 231'.

La butée 224 à roulement à billes présente deux pièces d'action 240, 240' portées par la bague interne et tournées l'une vers l'autre pour emprisonnement des doigts 222 du diaphragme 223. La fourchette 227 est actionnée par un moteur électrique M et par l'intermédiaire d'une transmission décrite par exemple dans le brevet FR-A-2523743, propre à en assurer le pivotement.

Grâce à l'invention, le mécanisme de coupure avec son boîtier, monté par exemple sur l'arbre de la boîte de vitesse, grâce à la jauge, enverra un signal au calculateur formant l'unité de pilotage de l'embrayage pour piloter le moteur électrique et déplacer la butée dans le sens F ou F1 et faire varier la charge du diaphragme et donc la pression de commande exercée par le plateau de pression pour serrage du disque de friction. Pour les autres détails, on se reportera au sus-mentionné document.

Le support fixe peut être le carter de la boîte de vitesse.

La butée à double effet peut être commandée hydrauliquement, la pression de la chambre de commande de l'organe de manoeuvre de la fourchette étant modifiée en fonction de l'information délivrée par le capteur, selon l'invention, pour déplacer la butée dans un sens ou dans l'autre et modifier la pression de serrage.

On appréciera que la butée 224 peut être à simple effet et agir uniquement en poussant sur le diaphragme 223 de la figure 13, la pièce 240 n'étant pas nécessaire.

La disposition décrite dans le sus-mentionné document FR-A-2523743 et son addition FR-A-2541793 est alors avantageuse grâce aux moyens positionneurs, comportant une vis sans fin, des pignons et un secteur denté (représentés schématiquement à la figure 13) et aux moyens élastiques modérateurs d'effort (non visibles).

En effet, les moyens de manoeuvre de la butée sont positionneurs, la liaison avec la vis sans fin pouvant être irréversible, de sorte que la butée se trouve positionnée à chaque instant, chaque position de la butée déterminant l'inclinaison du diaphragme et la charge exercée par celui-ci.

Enfin, l'embrayage au lieu d'être du type poussé, comme a la figure 13, peut être du type tiré. De même, au lieu d'un diaphragme, on peut utiliser une disposition à ressorts à boudin et leviers de débrayage.

## Revendications

1. Embrayage, notamment pour véhicule automobile, du genre comportant, globalement, deux parties coaxiales (A, B), l'une solidaire en rotation d'un premier arbre (16), équipée annulairement d'un ou plusieurs disques de friction (17) échelonnés axialement, l'autre, solidaire en rotation d'un second arbre (32), comprenant un plateau de pression (20) et un flasque de réaction (30) pour serrage axial du ou desdits disques (17) entre lesdits plateau et flasque (20, 30), ledit plateau de pression (20) étant soumis à l'action de moyens de commande (19, 20, 21) propres à le solliciter en direction du flasque de réaction (30), dans lequel un mécanisme de coupure (50) à écartement variable en fonction du couple, comportant deux parties (51, 52) séparées par une fente et reliées l'une à l'autre par des moyens d'écartement (62, 63, 64), est lié en rotation à l'un des premier (16) et second arbre (32) avec intervention de paliers anti-friction (53, 53') associés auxdites parties (51, 52), caractérisé en ce que le mécanisme de coupure (50) est lié en rotation à l'une des parties (A, B) de l'embrayage en étant logé et maintenu dans un boîtier (100), comportant au moins deux parties, disposé à l'extérieur du volume délimité par le plateau de pression (20) et le flasque de réaction (30) avec interposition directe ou indirecte entre le boîtier (100) et chaque partie (51, 52) du mécanisme de coupure d'un palier anti-friction (53, 53'), ledit boîtier (100) étant relié à un support fixe (12) et coopérant avec un capteur d'effort longitudinal (60) associé au mécanisme de coupure (50), ledit capteur (60) étant relié à une unité de pilotage (70) pilotant la pression de commande exercée par lesdits moyens de commande (19, 20, 21) sur le plateau de pression (20), et en ce que des moyens de limitation des forces parasites longitudinales (103, 104, 107, 60, 60', 200, 143), portés par l'un des éléments mécanisme de coupure (50) — boîtier (100), sont prévus pour minimiser lesdites forces parasites provenant notamment desdits premier (16) et second (32) arbre.

2. Embrayage selon la revendication 1, caractérisé en ce que lesdits moyens de limitation (104, 200) consistent en une suspension élastique du boîtier (100) au support fixe (12).

3. Embrayage selon la revendication 2, caractérisé en ce que le boîtier (100) est relié au support fixe (12) par au moins une languette élastique (200).

4. Embrayage selon l'une quelconque des revendications 1 à 3, caractérisé en ce que lesdits moyens de limitation consistent en des organes élastiques à action axiale (103, 143) portés par l'une des parties du mécanisme de coupure (51) pour intervention entre lesdites parties du mécanisme de coupure.

5. Embrayage selon l'une quelconque des revendications 1 à 4, dans lequel le palier anti-friction (53, 53') intervient entre ledit boîtier (100) et un moyeu (137, 138), que présente chaque dite partie (51, 52) concernée à cet effet, caractérisé en ce que le boîtier (100) comporte deux pièces (130, 131) reliées l'une à l'autre, et en ce que l'une desdites pièces (131) porte extérieurement une jauge de contrainte (60).

6. Embrayage selon la revendication 5, caractérisé en ce que le mécanisme de coupure (50) comporte des billes (141), un moyeu (137) solidaire d'un porte-billes (142) et en ce que chaque partie (51, 52) comporte un flasque (139, 145) doté d'empreintes pour réception des billes (141), ledit porte-billes (142) étant interposé axialement à jeu entre lesdits flasques (139, 145) et portant en surépaisseur des ressorts (143) pour contact avec lesdits flasques.

7. Embrayage selon la revendication 6, caractérisé en ce que l'une des pièces (131) est emboîtée à jeu radial dans l'autre pièce (130) avec l'intervention radiale d'un organe élastique (136) entre lesdites pièces (130, 131).

8. Embrayage selon l'une quelconque des revendications 5 à 7, caractérisé en ce que les deux pièces (130, 131) du boîtier (100) sont rigides et reliées entre elles par des boulons (133) traversant des rebords radiaux périphériques (132, 135), que présente chacune desdites pièces à cet effet, et en ce que ledit rebord (132) de l'une (130) desdites pièces est localement, pour l'un des boulons (133), d'épaisseur réduite pour logement d'une jauge de contrainte (60) entre ledit rebord (132) et l'écrou du boulon (133) concerné, ladite jauge étant traversée par ledit boulon (133).

9. Embrayage selon la revendication 5 ou 6, caractérisé en ce que les deuxdites pièces (130, 131) du boîtier sont déformables longitudinalement, et en ce qu'une jauge de contrainte (60) est collée sur l'une desdites pièces.

10. Embrayage selon la revendication 2 ou 3, caractérisé en ce que le boîtier (100) est délimité par une couronne (105) liée axialement à deux pièces de retenues (54, 54') en contact chacune avec un roulement (53, 53') interposé entre celle-ci et l'une des parties (51, 52) du mécanisme de coupure (50), en ce qu'une jauge de contrainte (60) est portée par ladite couronne (105), et en ce que chaque pièce de retenue (54, 54') est solidarisée au support fixe (12) par un organe élastique (104) tel qu'une languette tangentielle (104) ou un disque élastique.

11. Embrayage selon l'une quelconque des revendications 1 à 3, caractérisé en ce qu'il est associé un capteur d'effort longitudinal (60, 60') à chaque partie du mécanisme de coupure (50), les deuxdits capteurs étant disposés de part et d'autre du mécanisme de coupure (50) pour action sur ledit boîtier (100).

12. Embrayage selon l'une quelconque des revendications 1 à 3, caractérisé en ce que chaque partie (51, 52) du mécanisme de coupure (50) est reliée respectivement à un demi-arbre (106) lié en rotation au flasque de réaction (30) de l'embrayage et au second arbre (32) par un disque (107) axialement élastique.

13. Embrayage selon l'une quelconque des revendications précédentes, dans lequel les moyens de commande (19, 20, 21) comportent deux pièces (19, 20) en relation de cylindre-piston formant entre elles une chambre de pression à volume variable (21) montée dans un circuit d'alimentation hydraulique, la pièce mobile de cet ensemble formant le plateau de pression de l'embrayage, caractérisé en ce que le capteur d'effort longitudinal (60) est relié à une unité de pilotage (70) pilotant un organe de modulation (80) monté dans le circuit d'alimentation (22) de la chambre de pression (21) pour faire varier la pression de ladite chambre (21).

**Patentansprüche**

1. Kupplung, insbesondere für Kraftfahrzeuge, enthaltend im wesentlichen zwei koaxiale Teile (A, B), von denen das eine drehbeweglich mit einer ersten Welle (16) verbunden ist, die ringförmig mit einer oder mehreren axial versetzten Reibscheiben (17) ausgerüstet ist, und von denen das andere drehbeweglich mit einer zweiten Welle (32) verbunden ist, die eine Druckplatte (20) und einen Gegendruckflansch (30) für die axiale Einspannung der genannten Scheibe(n) (17) zwischen der genannten Platte und dem genannten Flansch (20, 30) enthält, wobei die genannte Druckplatte (20) der Einwirkung von Betätigungsmitteln (19, 20, 21) ausgesetzt ist, die geeignet sind, darauf eine Kraft in Richtung des Gegendruckflanschs (30) auszuüben, wobei ein Trennmechanismus (50) mit entsprechend dem Moment veränderlichem Abstand, bestehend aus zwei durch einen Schlitz voneinander getrennten und miteinander durch Abstandsmittel (62, 63, 64) verbundenen Teilen (51, 52), drehbeweglich mit einer Welle, der ersten (16) oder der zweiten Welle (32), verbunden ist, während mit den genannten Teilen (51, 52) verbundene Wälzlager (53, 53') eingreifen, **dadurch gekennzeichnet**, daß der Trennmechanismus (50) drehbeweglich mit einem der Teile (A, B) der Kupplung verbunden und in einem Gehäuse (100) untergebracht und befestigt ist, bestehend aus wenigstens zwei Teilen, angeordnet außerhalb des von der Druckplatte (20) und dem Gegendruckflansch (30) begrenzten Volumens, unter direkter oder indirekter Einschaltung zwischen dem Gehäuse (100) und jedem Teil (51, 52) des Trennmechanismus eines Wälzlagers (53, 53'), wobei das genannte Gehäuse (100) mit einer festen Stütze (12) verbunden ist und mit einem zum Trennmechanismus (50) gehörenden Längs-Kraftaufnehmer (60) zusammenwirkt, wobei der genannte Aufnehmer (60) mit einer Regeleinheit (70) verbunden ist, die den von den genannten Betätigungsmitteln (19, 20, 21) auf die Druckplatte (20) ausgeübten Betätigungsdruck regeln, und daß Mittel zur Begrenzung der Längs-Störkräfte (103, 104, 107, 60, 60', 200, 143), die auf einem der Elemente Trennmechanismus (50) — Gehäuse (100) aufliegen, vorgesehen sind, um die genannten Störkräfte, die vornehmlich von der genannten ersten (16) und zweiten (32) Welle ausgehen, zu minimieren.

2. Kupplung nach Anspruch 1, **dadurch gekennzeichnet**, daß die genannten Begrenzungsmittel (104, 200) aus einer elastischen Aufhängung des Gehäuses (100) an der festen Stütze (12) bestehen.

3. Kupplung nach Anspruch 2, **dadurch gekennzeichnet**, daß das Gehäuse (100) über wenigstens eine elastische Zunge (200) mit der festen Stütze (12) verbunden ist.

4. Kupplung nach einem der Ansprüche 1 bis 3, **dadurch gekennzeichnet**, daß die genannten Begrenzungsmittel aus axial wirksamen elastischen Organen (103, 143) bestehen, die auf einem der Teile des Trennmechanismus (51) aufliegen, um zwischen den genannten Teilen des Trennmechanismus einzugreifen.

5. Kupplung nach einem der Ansprüche 1 bis 4, wobei das Wälzlager (53, 53') zwischen dem genannten Gehäuse (100) und einer Nabe (137, 138), die jedes der betreffenden genannten Teile (51, 52) zu diesem Zweck aufweist, angeordnet ist, **dadurch gekennzeichnet**, daß das Gehäuse (100) zwei Stücke (130, 131) aufweist, die miteinander verbunden sind, und daß eines der genannten Stücke (131) außen mit einem Dehnungsmesser (60) versehen ist.

6. Kupplung nach Anspruch 5, **dadurch gekennzeichnet**, daß der Trennmechanismus (50) Kugeln (141) und eine fest mit einem Kugelhalter (142) verbundene Nabe (137) aufweist und daß jeder Teil (51, 52) einen mit Vertiefungen für die Aufnahme der Kugeln (141) versehenen Flansch (139, 145) aufweist, wobei der genannte Kugelhalter (142) axial mit einem Spiel zwischen den genannten Flanschen (139, 145) angeordnet ist und in der Überdicke Federn (143) für den Kontakt mit den genannten Flanschen trägt.

7. Kupplung nach Anspruch 6, **dadurch gekennzeichnet**, daß eines der Stücke (131) mit radialem Spiel in das andere Stück (130) unter radialer Einschaltung eines elastischen Organs (136) zwischen den genannten Stücken (130, 131) eingesetzt ist.

8. Kupplung nach einem der Ansprüche 5 bis 7, **dadurch gekennzeichnet**, daß die beiden Stücke (130, 131) des Gehäuses (100) starr ausgeführt und miteinander durch Bolzen (133) verbunden sind, die durch radiale Umfangskanten (132, 135) hindurchtreten, die jedes der genannten Stücke zu diesem Zweck aufweist, und daß die genannte Kante (132) von einem (130) der genannten Stücke örtlich für einen der Bolzen (133) eine reduzierte Dicke für die Aufnahme eines Dehnmeßstreifens (60) zwischen der genannten Kante (132) und der Mutter des betreffenden Bolzens (133) aufweist, wobei der genannte Bolzen (133) durch den genannten Dehnmeßstreifen hindurchtritt.

9. Kupplung nach Anspruch 5 oder 6, **dadurch gekennzeichnet**, daß die beiden genannten Stücke (130, 131) des Gehäuses in Längsrichtung verformbar sind und daß ein Dehnmeßstreifen (60) mit einem der genannten Stücke verklebt ist.

10. Kupplung nach Anspruch 2 oder 3, **dadurch gekennzeichnet**, daß das Gehäuse (100) durch einen Kranz (105) begrenzt wird, der axial mit zwei Haltestücken (54, 54') verbunden ist, die jeweils mit einem zwischen diesem und einem der Teile (51, 52) des Trennmechanismus (50) eingefügten Lager (53, 53') in Kontakt steht, daß ein Dehnmeßstreifen (60) auf dem genannten Kranz (105) aufliegt und daß jedes Haltestück (54, 54') fest mit der festen Stütze (12) durch ein elastisches Organ (104), wie z.B. eine tangentiale Zunge (104) oder eine elastische Scheibe, verbunden ist.

11. Kupplung nach einem der Ansprüche 1 bis 3, **dadurch gekennzeichnet**, daß jedem Teil des Trennmechanismus (50) ein Längskraftaufnehmer (60, 60') zugeordnet ist, wobei die genannten beiden Aufnehmer zur Einwirkung auf das genannte Gehäuse (100) beiderseits des Trennmechanismus (50) angeordnet sind.

12. Kupplung nach einem der Ansprüche 1 bis 3, **dadurch gekennzeichnet**, daß jeder Teil (51, 52) des Trennmechanismus (50) mit einer Halbachse (106), die drehbeweglich mit dem Gegendruckflansch (30) der Kupplung verbunden ist, bzw. der zweiten Welle (32) durch eine axial elastische Scheibe (107) verbunden ist.

13. Kupplung nach einem der vorherigen Ansprüche, wobei die Betätigungsmittel (19, 20, 21) zwei mit dem Kolben-Zylinder in Beziehung stehende Stücke (19, 20) aufweisen, zwischen denen eine Druckkammer mit variablem Volumen (21) gebildet wird, die Teil eines hydraulischen Versorgungskreislaufs ist, während das bewegliche Stück dieser Einheit die Druckplatte der Kupplung bildet, **dadurch gekennzeichnet**, daß der Längskraftaufnehmer (60) mit einer Regeleinheit (70) zur Steuerung eines Modulationsorgans (80) verbunden ist, welches im Versorgungskreislauf (22) der Druckkammer (21) angebracht ist, um den Druck in der genannten Kammer (21) verändern zu können.

## Claims

1. A clutch, especially for a motor vehicle, of the kind comprising generally two coaxial parts (A, B), one of which is fixed with respect to a first shaft (16) for rotation with the latter, and which carries one or a plurality of annular friction discs (17) spaced apart axially, while the other is fixed with respect to a second shaft (32) for rotation with the latter, and further comprising a pressure plate (20) and a reaction plate (30) for gripping the said disc or discs (17) axially between the said plates (20, 30), the said pressure plate (20) being subjected to the action of control means (19, 20, 21) which are adapted to bias it towards the reaction plate (30), wherein a limiting mechanism (50), adapted for variable expansion as a function of torque and comprising two parts (51, 52) separated by a gap and joined to each other through spacing means (62, 63, 64), is coupled to either the first shaft (16) or the second shaft (32) for rotation with that shaft, with anti-friction bearings (53, 53'), associated with the said parts (51, 52), being interposed, characterised in that the limiting mechanism (50) is coupled to one of the parts (A, B) of the clutch, for rotation therewith, being located and retained in a housing (100) comprising at least two parts disposed outside the volume delimited by the pressure plate (20) and the reaction plate (30), with an anti-friction bearing (53, 53') being directly or indirectly disposed between the housing (100) and each part (51, 52) of the limiting mechanism, the said housing (100) being connected to a fixed support (12) and cooperating with a sensor (60) for detecting longitudinal forces associated with the limiting mechanism (50), the said sensor (60) being connected to a monitoring unit (70) for monitoring the control pressure exerted by the said control means (19, 20, 21) on the pressure plate (20), and in that limiting means (103, 104, 107, 60, 60', 200, 143), for limiting parasitic longitudinal forces and being carried by one of the elements consisting of the limiting mechanism (50) and the housing (100), are provided for the purpose of minimising the said parasitic forces that arise especially from the said first shaft (16) and second shaft (32).

2. A clutch according to Claim 1, characterised in that the said limiting means (104, 200) comprise a resilient suspension suspending the housing (100) from the fixed support (12).

3. A clutch according to Claim 2, characterised in that the housing (100) is connected to the fixed support (12) by at least one resilient tongue (200).

4. A clutch according to any one of Claims 1 to 3, characterised in that the said limiting means comprise axially acting resilient members (103, 143) carried by one of the parts of the limiting mechanism (51) so as to act between the said parts of the limiting mechanism.

5. A clutch according to any one of Claims 1 to 4, in which the anti-friction bearing (53, 53') acts between the said housing (100) and a hub (137, 138) with which each said part (51, 52) is provided for this purpose, characterised in that the housing (100) comprises two members (130, 131) connected to each other, and in that one of the said members (131) carries a strain gauge (60) on its outside.

6. A clutch according to Claim 5, characterised in that the limiting mechanism (50) includes balls (141), together with a hub (137) which is fixed to a ball carrier (142), and in that each part (51, 52) includes a radial plate member (139, 145) formed with recesses for receiving the balls (141), the said ball carrier (142) being interposed axially, with a clearance, between the said radial plate members (139, 145) and carrying springs (143) in extension of its thickness for contact with the said radial plate members.

7. A clutch according to Claim 6, characterised in that one of the members (131) is nested with a radial clearance in the other member (130), with a resilient member (136) being radially interposed between the said members (130, 131).

8. A clutch according to any one of Claims 5 to 7, characterised in that the two members (130, 131) of the housing (100) are rigid and are joined together by means of bolts (133) extending through peripheral radial flanges (132, 135) formed on each of the said members for this purpose, and in that the said flange (132) of one of the said members (130) is locally, in association with one of the bolts (133), reduced in thickness in order to accommodate a strain gauge (60) between the said flange (132) and the nut of the bolt (133) concerned, with the said bolt (133) extending through the said gauge.

9. A clutch according to Claim 5 or Claim 6, characterised in that the two said members (130, 131) of the housing are longitudinally deformable, and in that a strain gauge (60) is adhesively secured on one of the said members.

10. A clutch according to Claim 2 or Claim 3, characterised in that the housing (100) is delimited by a crown (105) which is joined axially to two retaining members (54, 54'), each of which is in contact with a rolling bearing (53, 53') which is interposed between the latter and one of the parts (51, 52) of the limiting mechanism (50), and in that a strain gauge (60) is carried by the said crown (105), and in that each retaining member (54, 54') is fixed to the fixed support (12) by a resilient member (104), for example a tangential tongue (104) or a resilient disc.

11. A clutch according to any one of Claims 1 to 3, characterised in that a longitudinal force sensor (60, 60') is associated with each part of the limiting mechanism (50), with the two said sensors being disposed on either side of the limiting mechanism (50) for acting on the said housing (100).

12. A clutch according to any one of Claims 1 to 3, characterised in that each part (51, 52) of the limiting mechanism (50) is connected, respectively, to a half shaft (106) which is coupled to the reaction plate (30) of the. clutch for rotation therewith, and to the second shaft (32) through an axially resilient disc (107).

13. A clutch according to any one of the preceding Claims, in which the control means (19, 20, 21) comprises two members (19, 20) in cylinder and piston relationship, defining between them a variable volume pressure chamber (21) arranged in a hydraulic supply circuit, with the movable member of this assembly constituting the pressure plate of the clutch, characterised in that the longitudinal force sensor (60) is connected to a monitoring unit (70) controlling a modulating member (80) which is mounted in the supply circuit (22) of the pressure chamber (21), so as to vary the pressure in the said chamber (21).

FIG.1

EP 0 335 782 B1

## FIG.2

FIG.3

FIG.4

FIG.5

FIG.6

FIG .7

EP 0 335 782 B1

FIG.9

FIG.8

FIG.10

FIG.11

FIG.12

FIG.13

EP 0 335 782 B1